Europäisches Patentamt

European Patent Office

Office européen des brevets

(11) Numéro de publication : **0 207 833**
**B1**

(12) **FASCICULE DE BREVET EUROPÉEN**

(45) Date de publication du fascicule du brevet :
28.09.88

(51) Int. Cl.⁴ : **F 16 B 31/02**

(21) Numéro de dépôt : **86401202.6**

(22) Date de dépôt : **04.06.86**

(54) Bouton fileté à limiteur de couple.

(30) Priorité : 19.06.85 FR 8509336

(43) Date de publication de la demande :
07.01.87 Bulletin 87/02

(45) Mention de la délivrance du brevet :
28.09.88 Bulletin 88/39

(84) Etats contractants désignés :
DE GB IT

(56) Documents cités :
FR-A- 2 523 499
GB-A- 2 031 317
US-A- 2 685 812
US-A- 3 289 524
US-A- 3 709 087
US-A- 4 176 582
US-A- 4 408 936

(73) Titulaire : AUTOMOBILES PEUGEOT, Société dite:
75, Avenue de la Grande-Armée
F-75761 Paris Cedex 16 (FR)

AUTOMOBILES CITROEN
62 Boulevard Victor-Hugo
F-92200 Neuilly-sur-Seine (FR)

(72) Inventeur : Lejards, Jacques
50 avenue des Ramages
F-95220 Herblay (FR)

(74) Mandataire : Moncheny, Michel et al
c/o Cabinet Lavoix 2 Place d'Estienne d'Orves
F-75441 Paris Cedex 09 (FR)

Jouve, 18, rue St-Denis, 75001 Paris, France.

## Description

La présente invention concerne un bouton fileté à limiteur de couple. Elle peut s'appliquer de façon générale à tout système vis-écrou dans lequel un couple de serrage trop important risque de détériorer le système.

On connaît des écrous à limiteur de couple du type comportant un écrou proprement dit, un chapeau sur lequel est exercé le couple et une pièce intermédiaire qui enserre l'écrou et qui est déformable de façon à libérer l'écrou de son emprise pour un couple de serrage dépassant une certaine valeur. On peut citer par exemple le brevet français n° 1 474 434 (figures 6 à 11) et le brevet américain n° 3 504 591.

Les dispositifs décrits dans ces brevets comprennent une pièce intermédiaire constituée par des ressorts prenant appui d'une part sur le chapeau et d'autre part sur l'écrou ; à partir d'un certain couple, l'extrémité des ressorts en appui sur l'écrou glisse sur celui-ci.

Toutefois, ces dispositifs sont peu fiables lors du desserrage de l'écrou ; en particulier, si le couple de desserrage doit être important, en raison du grippage du dispositif par exemple, on peut ne pas parvenir à desserrer l'écrou, la limitation de couple s'effectuant au desserrage comme au serrage. En outre les écrous utilisés sont fabriqués spécialement pour ces dispositifs, par exemple avec une surface extérieure en dents de scie et sont donc coûteux.

On connaît d'autre part le brevet américain n° 3 425 314 qui décrit un écrou comportant des dents de scie sur sa surface extérieure pour un outil de serrage percé d'un alésage muni de dents de scie correspondantes ; l'outil comporte en outre des fentes radiales qui le rendent déformable de façon à ce que l'outil glisse sur la surface extérieure de l'écrou à partir d'un certain couple. Cet ensemble écrou-outil permet un desserrage fiable, sans limitation de couple, mais la réalisation de l'écrou comme de l'outil de serrage est compliquée donc coûteuse. En outre l'outil de serrage est complètement indépendant de l'écrou et peut donc être égaré.

La présente invention remédie aux inconvénients des brevets précités : elle a pour but un bouton fileté à limiteur de couple comportant un écrou destiné à être vissé sur un élément fileté correspondant, un chapeau sur lequel est exercé le couple de serrage et de desserrage du bouton et une pièce intermédiaire qui enserre l'écrou et qui est déformable de façon à libérer l'écrou de son emprise pour un couple de serrage dépassant une valeur prédéterminée, ce bouton fileté étant simple et peu coûteux, limitant le couple au serrage mais étant susceptible d'être desserré de façon fiable quel que soit le couple de desserrage.

Dans ce but, la pièce intermédiaire comporte un logement dont la forme et la dimension correspondent au contour externe de l'écrou et des moyens d'appui destinés à coopérer avec des moyens correspondants du chapeau pour la transmission du couple de serrage et de desserrage du chapeau à la pièce intermédiaire, les moyens d'appui associés au chapeau ayant une disposition par rapport à la pièce intermédiaire telle que, dans leur position d'appui sur les moyens correspondants de la pièce intermédiaire pour le serrage, ces moyens soient susceptibles de déformer la pièce intermédiaire pour un certain couple et que, dans leur position d'appui pour le desserrage, ces moyens ne puissent déformer la pièce intermédiaire quel que soit le couple de desserrage.

Dans un mode préféré de réalisation du dispositif selon l'invention, les moyens pour la transmission du couple du chapeau à la pièce intermédiaire sont constitués de deux bossages diamétralement opposés sur la partie externe de la pièce intermédiaire et de deux languettes diamétralement opposées sur la partie interne du chapeau.

La pièce intermédiaire comporte une fente diamétrale constituant un angle sensiblement égal à 45° avec l'axe des bossages.

La largeur des bossages et des languettes est prévue de façon à ce que, lorsqu'ils coopèrent, l'angle de leurs axes soit sensiblement égal à 45°.

La pièce intermédiaire est réalisée en une matière déformable telle qu'une matière plastique.

L'écrou est de préférence un écrou hexagonal de type classique.

Mais afin d'être mieux comprise, l'invention va maintenant être décrite de façon plus précise en se référant à un mode de réalisation de l'invention, donné uniquement à titre d'exemple, et représenté par les dessins annexés.

La figure 1 est une vue en perspective, éclatée, d'un bouton fileté selon l'invention, avec arrachement d'une portion du chapeau.

La figure 2 représente une coupe longitudinale du bouton de la figure 1.

Les figures 3 et 4 sont des vues suivant F du bouton de la figure 1, respectivement en position de serrage et de desserrage de l'écrou.

Le bouton représenté sur ces figures est constitué d'un écrou 1, d'un chapeau 2 et d'une pièce intermédiaire 3.

L'écrou est un écrou hexagonal de type classique et vient se loger dans un trou hexagonal 4 cylindrique ou légèrement cônique prévu dans l'alésage central de la pièce intermédiaire 3 qui a la forme d'une douille.

La pièce intermédiaire 3 est en matière déformable telle qu'une matière plastique, par exemple du polyamide ou de polyformaldéhyde (commercialisé sous la marque DELRIN). Le trou hexagonal 4 est prolongé par un alésage 5 pour le passage d'une tige filetée (non représentée) sur laquelle le bouton est destiné à être vissé. La pièce 3 comporte sur sa surface latérale externe deux bossages 6 et 6' diamétralement opposés dont le plan médian contenant l'axe de la pièce 3 fait un angle de 45° avec une fente diamétrale 7 orientée parallèlement à l'axe de la pièce 3 et traversant cette pièce sur toute son épaisseur.

Le chapeau 2, réalisé de préférence en matière plastique, est percé d'un alésage 8 pour la tige filetée, prolongé par un alésage 9 de plus grand diamètre dans lequel vient se loger la pièce intermédiaire 3. Il comporte, à la surface de l'alésage 9, deux languettes 10 et 10' diamétralement opposées destinées à coopérer avec les bossages 6 et 6' de la pièce intermédiaire 3 pour transmettre à la pièce 3 un couple de serrage ou de desserrage exercé sur la partie externe du chapeau. Dans le mode représenté, la partie externe du chapeau est conçue pour permettre d'exercer manuellement ce couple.

Le chapeau 2 est fermé à son extrémité opposée à l'alésage 8 par un couvercle 11 qui sert également de butée pour la tige filetée (non représentée).

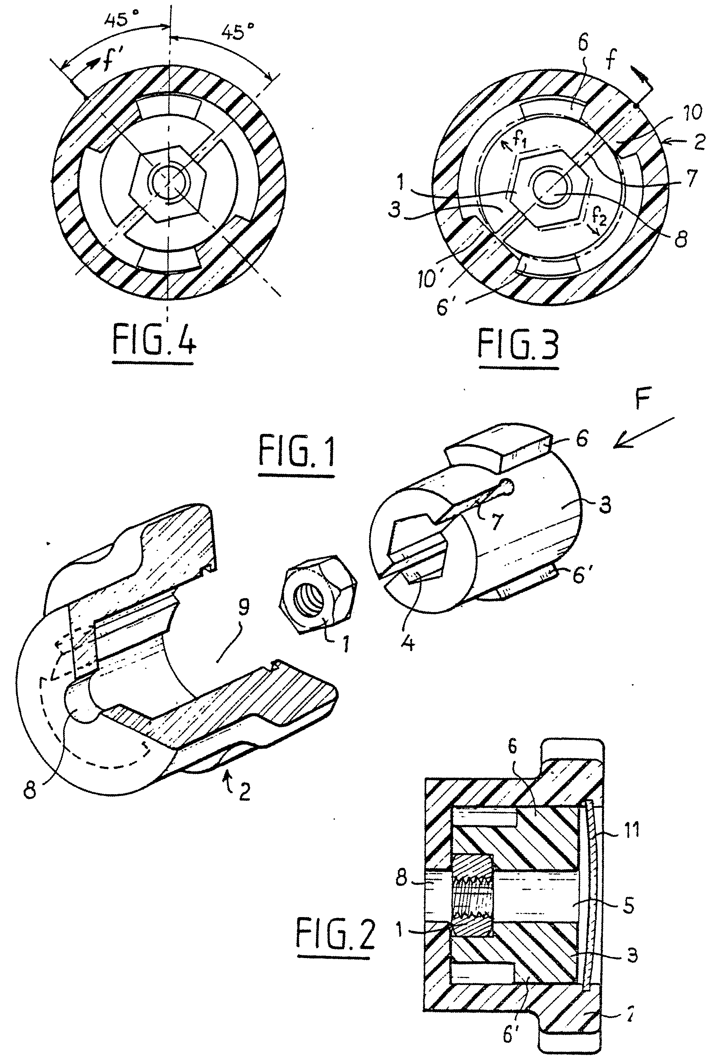

La largeur des bossages 6 et 6' et des languettes 10 et 10' est prévue de façon à ce que, lorsqu'ils coopèrent, l'angle de leurs plans médians passant par l'axe de la pièce intermédiaire 3 soit de 45°. Les traces de ces plans médians ou plans de symétrie des bossages et languettes sur les figures 3 et 4 ont été représentés en traits discontinus et constituent les axes de symétrie des bossages et languettes dans le plan de figure. Ainsi, l'axe des languettes 10 et 10' est confondu avec l'axe de la fente 7 lors du serrage du bouton (figure 3) alors qu'il se trouve perpendiculaire à l'axe de la fente 7 lors du desserrage du bouton (figure 4).

Le fonctionnement du bouton selon l'invention est le suivant :

Lorsque l'on exerce un couple de serrage sur le bouton, dans le sens de la flèche f (figure 3), les languettes 10 et 10' coopèrent respectivement avec les bossages 6 et 6' pour entraîner la pièce intermédiaire 3 et par conséquent l'écrou en rotation. A partir d'un certain couple de serrage, le couple exercé par les languettes 10 et 10' sur la pièce intermédiaire 3 au niveau de la fente 7 provoque une déformation de la pièce 3 dans la direction des flèches f1 et f2, comme indiqué en pointillés sur la figure 3. Quand la pièce 3 est ainsi déformée elle glisse sur les pans de l'écrou 1 et n'entraîne plus celui-ci en rotation.

Lorsque l'on exerce un couple de desserrage sur le bouton, dans le sens de la flèche f (figure 4), l'axe des languettes 10 et 10' se trouve perpendiculaire à l'axe de la fente 7 ; ainsi, quelle que soit la valeur du couple exercé, l'écrou 1 reste maintenu serré dans le logement 4 prévu pour lui dans la pièce intermédiaire 3.

Le bouton fileté que l'on vient de décrire présente de grands avantages :

Il permet de limiter le couple de serrage à une valeur donnée tout en étant très fiable au desserrage même lorsque le couple de desserrage doit être important, par exemple en cas de grippage de l'écrou sur la tige filetée si le système vis-écrou n'a pas fonctionné depuis longtemps (dans ce cas, la valeur du couple de desserrage à appliquer peut être bien supérieure à la valeur limite du couple de serrage).

Le bouton décrit est très simple à réaliser : il utilise un écrou de type classique ; la pièce intermédiaire et le chapeau, en matière plastique et de structures simples, sont faciles à réaliser. Il en résulte un coût peu élevé du bouton.

Le bouton décrit est d'une utilisation très commode, puisqu'il ne nécessite l'usage d'aucun outil indépendant susceptible d'être égaré. Même si l'on préfère exercer un couple sur le chapeau au moyen d'une clé de type classique plutôt que manuellement comme dans l'exemple décrit, le bouton selon l'invention ne nécessite pas l'usage d'un outil indépendant spécialement conçu pour être utilisé avec le bouton et donc irremplaçable en cas de perte, comme dans le dispositif du brevet américain n° 3 425 314 précité.

**Revendications**

1. Bouton fileté à limiteur de couple comportant un écrou (1) destiné à être vissé sur un élément fileté correspondant, un chapeau (2) sur lequel est exercé le couple de serrage ou de desserrage du bouton et une pièce intermédiaire (3) qui enserre l'écrou (1) et qui est déformable de façon à libérer l'écrou (1) de son emprise pour un couple de serrage dépassant une valeur prédéterminée, caractérisé par le fait que la pièce intermédiaire (3) comporte un logement (4) dont la forme et la dimension correspondent au contour externe de l'écrou (1) et des moyens d'appui (6, 6') destinés à coopérer avec des moyens correspondants (10, 10') du chapeau (2) pour la transmission du couple de serrage et de desserrage du chapeau (2) à la pièce intermédiaire (3), les moyens d'appui (10, 10') associés au chapeau (2) ayant une disposition par rapport à la pièce intermédiaire (3) telle que, dans leur position d'appui sur les moyens correspondants (6, 6') de la pièce intermédiaire (3) pour le serrage, ces moyens (10, 10') soient susceptibles de déformer la pièce intermédiaire (3) pour un certain couple et que dans leur position d'appui pour le desserrage, ces moyens (10, 10') ne puissent déformer la pièce intermédiaire quel que soit le couple exercé.

2. Bouton fileté suivant la revendication 1, caractérisé par le fait que la pièce intermédiaire (3) en matériau déformable a la forme d'une douille dont l'alésage central constitue le logement (4) de l'écrou (1), dont la surface latérale externe porte deux bossages (6, 6') diamétralement opposés et qui comporte une fente diamétrale (7) sur toute son épaisseur et sur une certaine partie de sa longueur dans la direction de son axe, le chapeau (2) ayant un alésage interne (9) dans lequel est disposée la pièce intermédiaire (3) et comportant deux languettes (10, 10') en saillies radiales vers l'intérieur, diamétralement opposées, destinées à coopérer avec les bossages (6, 6') de la pièce intermédiaire pour le serrage et le desserrage du bouton fileté.

3. Bouton fileté suivant la revendication 2, caractérisé par le fait que les bossages (6, 6') de la pièce intermédiaire (3) sont placés sensiblement à 45° par rapport à la fente (7), suivant la circonférence de la pièce intermédiaire (3) et que les bossages (6, 6') et les languettes (10, 10') ont une longueur telle dans la direction circonférentielle que leurs plans médians axiaux font un angle sensiblement égal à 45° dans leurs positions d'appui, le chapeau (2) étant engagé sur la pièce intermédiaire (3) de manière telle que les plans médians des languettes d'appui (10, 10') font un angle voisin de 90° avec la fente (7) dans leur position d'appui correspondant au desserrage et un angle voisin de 0° avec cette fente (7) dans la position d'appui correspondant au serrage.

4. Bouton fileté suivant l'une quelconque des revendications 1, 2 et 3, caractérisé par le fait que le logement (4) de l'écrou (1) a une section hexagonale.

5. Bouton fileté suivant l'une quelconque des revendications 1, 2, 3 et 4, caractérisé par le fait que la pièce intermédiaire est en une matière plastique telle que le polyamide ou le polyformaldéhyde.

**Claims**

1. A screwthreaded stud with torque-limiting means, comprising : a nut (1) adapted to be screwed on to a matching screwthreaded element ; a cap (2) on which the stud tightening or loosening torque is exerted ; and an intermediate member (3) which engages around the nut (1) and can be so deformed as to release the nut (1) from its engagement when a tightening torque exceeds a predetermined value, characterized in that the intermediate member (3) comprises a recess (4) whose shape and size matches the external contour of the nut (1) and bearing means (6, 6') adapted to cooperate with matching means (10, 10') of the cap (2) to transmit the torque for tightening and loosening the cap (2) to the intermediate member (3), the bearing means (10, 10') associated with the cap (2) being so arranged in relation to the intermediate member (3) that in the position in which they bear against the matching means (6, 6') of the intermediate member (3) for tightening, such means (10, 10') can deform the intermediate member (3) for a certain torque, while in their bearing position for loosening, such means (10, 10') cannot deform the intermediate member, whatever the torque exerted may be.

2. A screwthreaded stud according to claim 1, characterized in that the intermediate member (3) made of a deformable material takes the shape of a bush whose central bore forms the recess (4) for the nut (1) and whose external lateral surface bears two diametrically opposite bosses (6, 6') and which is formed with a diametral slot (7) throughout its thickness and over a certain portion of its length in the direction of its axis, the cap (2) being formed with an internal bore (9) which receives the intermediate member (3) and comprising two diametrically opposite inwardly and radially projecting tongues (10, 10') adapted to cooperate with the bosses (6, 6') of the intermediate member for the tightening and loosening of the screwthreaded stud.

3. A screwthreaded stud according to claim 2, characterized in that the bosses (6, 6') of the intermediate member (3) are disposed at substantially 45° in relation to the slot (7) in dependence on the circumference of the intermediate member (3), and the bosses (6, 6') and the tongues (10, 10') have a length such in the circumferential direction that their axial central planes form an angle of substantially 45° in their bearing positions, the cap (2) so engaging with the intermediate member (3) that the central planes of the bearing tongues (10, 10') form an angle close to 90° with the slot (7) in their bearing position corresponding to loosening, and an angle close to 0° with such slot (7) in the bearing position corresponding to tightening.

4. A screwthreaded stud according to any of claims 1, 2 and 3, characterized in that the recess (4) for the nut (1) has a hexagonal section.

5. A screwthreaded stud according to any of claims 1, 2, 3 and 4, characterized in that the intermediate member is made of a plastics material such as polyamide or polyformaldehyde.

**Patentansprüche**

1. Gewindezapfen mit Drehmomentbegrenzung, der aufweist : eine Schraubenmutter (1), zur Verschraubung auf ein ensprechendes Gewindeelement, eine Kappe (2), auf die das Anzieh- bzw. Lösedrehmoment des Gewindezapfens ausgeübt wird und ein Zwischenstück (3), das die Mutter (1) spannt und ds derart verformbar ist, daß es die Mutter (1) aus ihrer Anlage löst, wenn das Anziehdrehmoment einen vorbestimmten Wert überschreitet, dadurch gekennzeichnet, daß das Zwischenstück (3) ein Lager (4) aufweist, dessen Form und Größe den äußeren Konturen der Mutter (2) entsprechen und das Andruckorgane (6, 6') aufweist, die dazu bestimmt sind mit entsprechenden Organen (10, 10') der Kappe (2) zur Übertragung des Anzieh- bzw. Lösedrehmoments von der Kappe (2) auf das Zwischenstück (3) zusammenwirken, wobei die Andruckorgane (10, 10'), die mit der Kappe (2) verbunden sind, eine Anordnung gegenüber dem Zwischenstück (3) haben, daß ihre Auflageflächen auf den entsprechenden Organen (6, 6') des Zwischenstücks (3) diese Organe (10, 10') beim Anziehen in der Lage sind, das Zwischenstück (3) bei einem bestimmten Drehmoment zu verformen und daß sie in ihrer Auflageposition beim Lösen nicht in der Lage sind, das Zwischenstück zu verformen, unabhängig vom ausgeübtem Drehmoment.

2. Gewindezapfen nach Anspruch 1, dadurch gekennzeichnet, daß das Zwischenstück (3) aus verformbarem Material die Form einer Buchse hat, deren zentrale Öffnung das Lager (4) der Schraubenmutter (1) bildet und dessen äußere Seitenwand zwei diametrial gegenüberliegende Vorsprünge (6, 6') aufweist und die einen diametralen Schlitz (7) über ihre gesamte Dicke und über einen bestimmten Teil ihrer Länge in Richtung ihrer Achse aufweist, wobei die Kappe (2) eine innere Bohrung (9) aufweist, in der das Zwischenstück (3) angeordnet ist und wobei die Kappe zwei Zonen (10, 10') aufweist, die radial nach innen vorspringen und diametral gegenüberliegend angeordnet sind und dazu bestimmt sind, mit den Vorsprüngen (6, 6') des Zwischenstücks zum Anziehen und zum Lösen des Gewindezapfens zusammenzuwirken.

3. Gewindezapfen nach Anspruch 2, dadurch gekennzeichnet, daß die Vorsprünge (6, 6') des Zwischenstücks (3) ungefähr 45° versetzt gegenüber dem Schlitz (7) am Umfang des Zwischenstücks (3) angeordnet sind und daß die Vorsprünge (6, 6') und die Zonen (10, 10') eine Länge haben, derart, daß in der Umfangsrichtung ihre axialen Medianebenen einen Winkel bilden, der im wesentlichen 45° in ihrer Auflagestellung beträgt, wobei die Kappe (2) auf dem Zwischenstück (3) so aufgesetzt ist, daß die Medianebenen der Anlagezonen (10, 10') einen Winkel mit dem Spalt (7) von etwa 90° in ihrer entsprechenden Löse-Anlagestellung bilden und wobei diese mit dem Schlitz (7) einen Winkel von etwa 0° in ihrer entsprechenden Anzieh-Anlagestellung bilden.

4. Gewindezapfen nach einem der Ansprüche 1, 2 und 3, dadurch gekennzeichnet, daß das Lager (4) der Schraubenmutter (1) eine hexagonale Querschnittsfläche hat.

5. Gewindezapfen nach einem der Ansprüche 1, 2, 3 und 4, dadurch gekennzeichnet, daß das Zwischenstück aus einem Kunststoffmaterial wie z. B. Polyamid oder Polyformaldehyd besteht.

**0 207 833**

FIG.4

FIG.3

FIG.1

FIG.2